# EUROPÄISCHE PATENTSCHRIFT

(11) **EP 0 784 039 B1**
(45) Veröffentlichungstag und Bekanntmachung des Hinweises auf die Patenterteilung: **21.04.1999**
(21) Anmeldenummer: 97100385.0
(22) Anmeldetag: 11.01.1997
(51) Int. Cl.: C05F 17/00, C05F 9/00

(54) **Verfahren und Vorrichtung zum Abbau von organischem Material**
Process and device for the degradation of organic wastes
Procédé et appareil pour décomposition des déchets organiques

(30) Priorität: 11.01.1996 DE 19600711
(43) Veröffentlichungstag der Anmeldung: 16.07.1997
(73) Patentinhaber: AN biotec Abfallbehandlungsgesellschaft mbH, 28217 Bremen (DE)
(72) Erfinder: Westphal, Werner, 28203 Bremen (DE); Santjer, Rolf, 27726 Worpswede (DE)
(74) Vertreter: Eisenführ, Speiser & Partner

(56) Entgegenhaltungen:
- EP-A- 0 520 172
- EP-A- 0 567 184
- WO-A-94/29014

## Beschreibung

Die Erfindung betrifft ein Verfahren zum Abbau von organischem Material. Ferner betrifft die Erfindung eine Vorrichtung zum Abbau von organischem Material mit einer Eingabeeinrichtung zur Aufnahme von organischem Material und mindestens einer Behandlungseinrichtung, in der zumindest ein Teil der im organischen Material enthaltenen Substanzen unter aeroben und/oder anaeroben Bedingungen zersetzt wird, wobei die Behandlungseinrichtung mit der Eingabeeinrichtung über eine Verbindungseinrichtung verbunden ist, durch die das über die Eingabeeinrichtung eingegebene organische Material zur Behandlungseinrichtung geleitet wird.

Derartige Verfahren und Vorrichtungen sind bekannt. Beispielsweise beschreibt die EP-B-0 037 612 ein Verfahren zur anaeroben Digestion von festem organischem Material, das von Pflanzen oder Tieren oder beiden stammt, bei welchem der feste organische Abfall unter anaeroben Bedingungen in einen primären Reaktionsraum, der mit einem Sieb ausgerüstet ist, zersetzt wird, währenddessen der feste organische Abfall mit Wasser gespült wird, das mit löslichen und/oder unlöslichen anorganischen und/oder organischen Materialien, die von Pflanzen und/oder Tieren stammen, verunreinigt sein kann, um lösliche organische und anorganische Substanzen und die wasserlöslichen Fettsäuren, die durch die Versetzung gebildet werden, im wesentlichen aufzulösen und zu entfernen. Anschließend wird die so erhaltene Flüssigkeit, die im wesentlichen frei von nichtgelöstem festen organischen Abfall ist, aus dem primären Reaktionsraum in einen Hilfsreaktor beschickt, wobei im primären Reaktionsraum die verbleibenden organischen Rückstände zurückgelas-sen werden. In dem Hilfsreaktor wird das gelöste organische Material in der wässrigen Lösung unter anaeroben Bedingungen in ein Gemisch aus Kohlendioxid und Methangas umgewandelt.

Aus der DE-C-41 24 880 ist ferner ein Verfahren zur Kompostierung von organischen Abfällen bekannt, bei welchem die Abfälle zunächst durch aerobe Mikroorganismen unter Zufuhr eines sauerstoffhaltigen Gases aerob abgebaut werden, nach Abbau zumindest eines Teils der leicht abbaubaren Bestandteile der Abfälle die Zufuhr des sauerstoffhaltigen Gases beendet wird und die Abfälle anschließend unter Sauerstoffausschluß durch anaerobe Mikroorganismen anaerob abgebaut werden.

Aufgabe der Erfindung ist es nun, das Verfahren und die Vorrichtung der eingangs genannten Art effektiver auszubilden.

Zur Lösung dieser Aufgabe wird erfindungsgemäß ein Verfahren vorgeschlagen zum Abbau von organischem Material, mit einem ersten Verfahrensschritt, das organische Material mit einer Spülflüssigkeit zu spülen, und mindestens einem zweiten Verfahrensschritt, zumindest einen Teil der im organischen Material enthaltenen Substanzen unter aeroben und/oder anaeroben Bedingungen zu zersetzen.

Demnach zeichnet sich das erfindungsgemäße Verfahren dadurch aus, daß der erste Verfahrensschritt vor dem zweiten Verfahrensschritt durchgeführt wird, indem das gesamte abzubauende organische Material zunächst nur mit Spülflüssigkeit gespült wird, wodurch das organische Material im wesentlichen in in der Spülflüssigkeit gelöste organische Substanzen und nicht gelöste organische Rückstände aufgetrennt wird, und anschließend die gelösten organischen Substanzen und/oder die nicht gelösten organischen Rückstände einer aeroben und/oder anaeroben Zersetzung unterworfen werden. Dem zweiten Verfahrensschritt, der im übrigen für sich genommen bekannt ist, ist also ein erster Verfahrensschritt vorgeschaltet, in dem das organische Material mit Spülflüssigkeit behandelt wird. Dieser erfindungs-gemäße erste Verfahrensschritt bewirkt ein Herauswaschen von in der Spülflüssigkeit löslichen organischen Substanzen aus dem organischen Material. Mit Hilfe des erfindungsgemäßen ersten Verfahrensschrittes können die löslichen organischen Substanzen, die sich schnell biologisch umwandeln lassen und u.a. zu Geruchsemissionen führen können, auf einfache und schnelle Weise von den übrigen Substanzen des organischen Materials getrennt werden. Somit kann auch der zeitliche Aufwand zur Behandlung der übrigen Substanzen, die in der Regel aus organischen Feststoffen bestehen, erheblich reduziert werden. Damit einher geht auch ein reduzierter Bedarf an für die Durchführung des Verfahrens benötigter Energie.

In vielen Anwendungsfällen wird als nachgeschalteter zweiter Verfahrensschritt eine aerobe Zersetzung der nicht gelösten übrigen Substanzen gewählt. In diesen Fällen entfallen die - beim Stand der Technik erforderlichen - Hydrolysebehälter und sonstigen Vergärungsreaktoren, wodurch mit Hilfe der Erfindung die derzeit gängigen Investitionskosten für Anaerobanlagen zur Behandlung von organischen Feststoffen mindestens halbiert werden können. Schließlich können die organischen Reststoffe nach der Behandlung mit dem erfindungsgemäßen Verfahren bereits nach kurzer Zeit, in der Regel fünf bis sechs Stunden, wieder in die Landwirtschaft ausgebracht werden, so daß die Erfindung eine hohe Verfügbarkeit der behandelten organischen Substanzen ermöglicht.

Zwar ist es aus der EP-B-0 037 612 bekannt, einen Spülschritt und einen anaeroben Zersetzungsschritt durchzuführen; jedoch wird bei dem dort beschriebenen bekannten Verfahren das gesamte abzubauende organische Material einer anaeroben Zersetzung unterworfen und gleichzeitig während dieses anaeroben Zersetzungsschrittes und somit unter anaeroben Bedingungen auch noch gespült, um lösliche Substanzen zu entfernen. Demgegenüber findet jedoch beim erfindungs-gemäßen Verfahren, wie zuvor bereits ausgeführt wurde, der Spülschritt nicht während des anaeroben Zersetzungsschrittes und dabei unter anaeroben Bedingungen statt, sondern getrennt vor dem anaeroben Zersetzungsschritt und/oder wahlweise auch vor einem aeroben Zersetzungsschritt statt, indem das gesamte abzubauende organische Material zunächst nur mit Spülflüssigkeit gespült wird, wodurch das organische Material bereits vor dem anschließenden aeroben und/oder anaeroben Zersetzungsschritt im wesentlichen in in der Spülflüssigkeit gelöste organische Substanzen und nicht gelöste organische Rückstände aufgetrennt wird.

Nach alledem ist es mit Hilfe der Erfindung möglich geworden, das Behandlungsverfahren schneller und mit weniger apparativem und energetischem Aufwand als beim Stand der Technik durchzuführen.

Zeitlich besonders effektiv läßt sich das erfindungsgemäße Verfahren dann durchführen, wenn das organische Material während des Transportes zu dem Ort, an dem der zweite Verfahrensschritt durchgeführt wird, der Spülung unterworfen wird, wobei zur besonders wirksamen Durchspülung des organischen Materials die Spülflüssigkeit entgegen der Bewegungsrichtung des organischen Materials geleitet werden sollte (Gegenstromprinzip).

Zweckmäßigerweise wird das organische Material im wesentlichen mit Wasser gespült.

Die im ersten Verfahrensschritt zurückbleibenden nicht löslichen organischen Rückstände werden vorzugsweise im zweiten Verfahrensschritt unter aeroben Bedingungen zersetzt (sog. Nachkompostierung). Demnach werden die Spülflüssigkeit mit den darin enthaltenen gelösten organischen Substanzen und jene organischen Rückstände, bei denen es sich insbesondere im wesentlichen um Feststoffe handelt, getrennt, was im übrigen kontinuierlich oder auch diskontinuierlich erfolgen kann.

Die im ersten Verfahrensschritt gewonnenen und in der Spülflüssigkeit gelösten organischen Substanzen werden vorzugsweise im zweiten Verfahrensschritt unter anaeroben Bedingungen zersetzt. Hierzu führt das für die Spülflüssigkeit die darin gelösten organischen Substanzen dem Reaktionsraum zu, in dem während des zweiten Verfahrensschrittes die Zersetzung dieser organischen Substanzen unter anaeroben Bedingungen stattfindet und diese organischen Substanzen im wesentlichen in CH₄ und CO₂ umgewandelt werden. Vorzugsweise kann für diesen Teil des zweiten Verfahrensschrittes das in der EP-B-0 037 612 beschriebene Verfahren zur Anwendung kommen und der Reaktionsraum aus einem sog. Methanfermenter bestehen.

Die Spülflüssigkeit kann nach Trennung von den nichtgelösten organischen Rückständen zweckmäßigerweise für die Spülung des nachfolgenden organischen Materials wiederverwendet werden, und zwar vorzugsweise nach Durchlaufen des Reaktionsraumes, in dem die anaerobe Vergärung der löslichen organischen Substanzen stattfindet, so daß die Spülflüssigkeit im Kreislauf geführt wird.

Die Spülung im ersten Verfahrensschritt sollte unter gegenüber Raumtemperatur erhöhter Temperatur durchgeführt werden, wodurch die Effektivität noch gesteigert werden kann. Hierzu sollte die Spülflüssigkeit auf mindestens 30°C, vorzugsweise auf mindestens 60°C, vorzugsweise jedoch auf weniger als 100°C erwärmt werden. Durch eine solche Temperaturbehandlung kann die Verweilzeit des organischen Materials im ersten Verfahrensschritt kurz gehalten werden, ohne daß die Wirksamkeit der Spülung nachteilig beeinflußt wird.

Vorzugsweise beträgt die Dauer des ersten Verfahrensschrittes mindestens etwa zwei und maximal etwa acht Stunden.

Gemäßeinem weiteren Aspekt der Erfindung wird die der Erfindung zugrundeliegende Aufgabe ferner dadurch gelöst, daß in einer Vorrichtung der eingangs genannten Art Mittel zur Abgabe von Spülflüssigkeit zur Spülung des organischen Materials in der Verbindungseinrichtung vorgesehen sind.

Die Spülflüssigkeitsabgabemittel können stationär angeordnet sein.

Vorzugsweise weist die Verbindungseinrichtung Transportmittel zur Beförderung des organischen Materials von der Eingabeeinrichtung zur Behandlungseinrichtung auf. Bei dieser Ausführung sollten vorteilhafterweise die Spülflüssigkeitsabgabemittel oberhalb der Transportmittel angeordnet und als Berieselungsmittel ausgebildet sein. Die Transportmittel können bevorzugt eine Förderspirale aufweisen.

Ferner kann die Verbindungseinrichtung Mittel zum Ableiten der Spülflüssigkeit aufweisen. Für den Fall, daß die Verbindungseinrichtung Transportmittel aufweist, sollten die Spülflüssigkeitsableitungsmittel die Spülflüssigkeit entgegen der Transportrichtung der Transportmittel ableiten, wodurch sich eine besonders gute Durchspülung des organischen Materials ergibt. Die Transportmittel sollten hierzu in einem Kanal angeordnet sein, welcher die Spülflüssigkeitsableitungsmittel bildet und in Bewegungsrichtung des organischen Materials ansteigt, so daß aufgrund Schwerkrafteinfluß die im Kanal aufgefangene Spülflüssigkeit entgegen der Transportrichtung fließt. Die Spülflüssigkeitsableitungsmittel können ferner die Spülflüssigkeit zu einer Behandlungseinrichtung leiten, in der eine anaerobe Zersetzung der in der Spülflüssigkeit gelösten organischen Substanzen stattfindet, und Spülflüssigkeitsrückleitungsmittel vorgesehen sein, die die Spülflüssigkeit von dieser Behandlungseinrichtung den Spülflüssigkeitsabgabemitteln wieder zuführt, so daß die Spülflüssigkeit zweckmäßigerweise zum einen sowohl für den ersten als auch für den zweiten Verfahrensschritt verwendet und zum anderen im Kreislauf geführt und somit wiederverwendet werden kann.

Schließlich sollte die Verbindungseinrichtung von einem vorzugsweise wärmegedämmten Gehäuse im wesentlichen umgeben sein, um insbesondere Geruchsemissionen zu vermeiden.

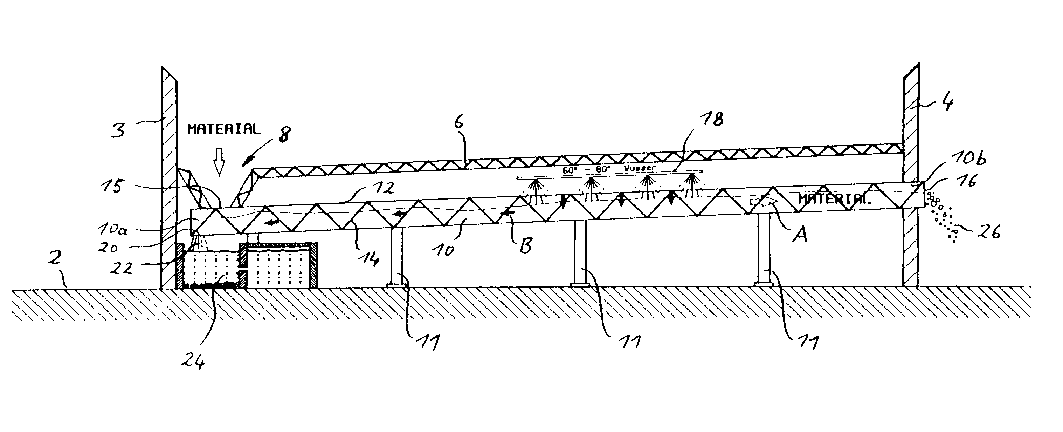

Nachfolgend wird ein bevorzugtes Ausführungsbeispiel der Erfindung anhand der beiliegenden Zeichnung näher erläutert, in der schematisch im Querschnitt eine Vorrichtung zum Abbau von organischem Material dargestellt ist.

Gemäß der Darstellung der Fig. ist die abgebildete Vorrichtung, die Teil einer nicht dargestellten Anlage zum Abbau von organischem Material ist, auf einem Boden 2 o.dgl. aufgestellt und wird von zwei auf dem Boden 2 stehenden Seitenwänden 3, 4 sowie eine obere Abdeckung 6 umschlossen. Die Seitenwände 3, 4 und/oder die obere Abdeckung 6 können aus wärmedämmendem Material bestehen.

An der gemäß der Fig. linken Seite der oberen Abdeckung 6 ist eine trichterförmige Eingabeöffnung 8 ausgebildet, durch die die Vorrichtung mit organischem Material beschickt wird, bei welchem es sich insbesondere um organische Feststoffe und Abfälle handelt.

Im Inneren des von den beiden Seitenwänden 3, 4 und der oberen Abdeckung 6 gebildeten Gehäuses ist eine Transporteinrichtung 10 angeordnet, die mittels Stelzen 11 auf dem Fußboden 2 abgestützt ist. Die Transporteinrichtung 10 weist einen halbrohrförmigen, nach oben offenen Kanal 12 auf, in dem eine Förderspirale 14 um eine in Längsrichtung des Kanals 12 verlaufende Achse drehbar gelagert ist. Das gemäß der beiliegenden Fig. linke Ende 10a der Transporteinrichtung 10 schließt sich an die trichterförmige Beschickungsöffnung 8 direkt an, wobei im Kanal 12 eine mit der Beschickungsöffnung 8 fluchtende, in der beiliegenden Fig. im einzelnen nicht dargestellte Einlaßöffnung 15 ausgebildet ist. Das über die Beschickungsöffnung 8 eingefüllte organische Material gelangt durch die Einlaßöff-nung 15 in den Kanal 12 und wird durch Rotation der Förderspirale 14 von dieser in Richtung des Pfeils A (gemäß der beiligenden Fig. nach rechts) transportiert. Der Kanal 12 ist an dem gemäß der beiligenden Fig. rechten Ende 10b der Transporteinrichtung 10 durch die Seitenwand 4 nach außen geführt und weist dort eine Ausgabeöffnung 16 auf.

Oberhalb der Transporteinrichtung 10 ist eine Berieselungseinrichtung 18 stationär angeordnet, die Spülflüssigkeit, die vorzugsweise im wesentlichen aus Wasser besteht, in Richtung auf die Transporteinrichtung 10 versprüht. Die Spülflüssigkeit tritt durch in der beiligenden Fig. nicht dargestellte Öffnungen an der Oberseite des Kanals 12 in dessen Inneres ein und gelangt dort mit dem von der Förderspirale 14 transportierten organischen Material in Kontakt. Zum Versprühen der Spülflüssigkeit weist die Berieselungseinrichtung 18 entsprechende, in der Fig. nicht näher dargestellte Düsen auf, die auf die Transporteinrichtung 10 gerichtet sind.

Die von der Berieselungseinrichtung 18 abgegebene Spülflüssigkeit ist zuvor von einer nicht dargestellten Heizeinrichtung auf eine Temperatur oberhalb der Raumtemperatur erwärmt worden, wobei die Temperatur des Wassers vorzugsweise zwischen 30° C und 100°C und insbesondere bei etwa 60°C bis 80°C liegt.

Nach Eintritt der Spülflüssigkeit in den Kanal 12 wird das dort in Richtung des Pfeils A von der Förderschnecke 14 transportierte organische Material entsprechend gespült. Durch die Spülung werden die im organischen Material enthaltenen - löslichen Substanzen "herausgewaschen" und von der Spülflüssigkeit aufgenommen. Während der Spülung fließt die Spülflüssigkeit von der Stelle ihres Eintritts im Kanal 12 in Richtung des Pfeils B (gemäß der beiliegenden Fig. nach links) entgegen der Bewegungsrichtung A des von der Förderspirale 14 transportierten organischen Materials, wodurch eine besonders wirkungsvolle Durchspülung des organischen Materials stattfindet. Erreicht wird dies dadurch, daß der Kanal 12 vom gemäß der beigefügten Fig. linken Ende 10a der Transporteinrichtung 10, das benachbart zur Beschickungsöffnung 8 liegt, zum gegenüberliegenden Ende 10b, an dem die Austrittsöffnung 16 vorgesehen ist, ansteigt, so daß die im Kanal 12 befindliche Spülflüssigkeit aufgrund des Schwerkrafteinflusses zum tieferliegenden Ende 10a der Transporteinrichtung 10 fließt, während aufgrund der Wirkung der Förderschnecke 14 das organische Material in Richtung auf das höhergelegene andere Ende 10b der Transporteinrichtung 10 transportiert wird.

Am unteren Ende 10a der Transporteinrichtung 10 ist der Boden des Kanals 1 2 mit einer Austrittsöffnung 20 versehen, durch die die Spülflüssigkeit mit den nun darin enthaltenen gelösten organischen Substanzen 22 austritt und von einem darunter liegenden Sedimentierbecken 24 aufgenommen wird.

Demnach werden also die löslichen organischen Substanzen aus dem organischen Material von dem Prozeßwasser aufgenommen und in das Sedimentierbecken 24 transportiert. Zurück bleiben nichtlösliche feste organische Rückstände 26, die aufgrund der Förderwirkung der Förderschnecke 14 aus der Auslaßöffnung 16 am höhergelegenen Ende 10b der Transporteinrichtung 10 ausgegeben werden.

Die festen organischen Rückstände 26 werden in einer nicht dargestellten Behandlungseinrichtung unter aeroben Bedingungen zersetzt, wobei insbesondere die bisher bekannten Verfahren zur Anwendung kommen können (Nachkompostierung).

Die im Sedimentierbecken 24 gesammelte Spülflüssigkeit mit den darin gelösten organischen Substanzen kann einer ebenfalls nicht dargestellten zweiten Behandlungseinrichtung zugeführt werden, in dem die löslichen organischen Substanzen unter anaeroben Bedingungen im wesentlichen in CH₄ und CO₂ umgewandelt werden. Hier kann insbesondere ein Verfahren verwendet werden, wie es beispielsweise in der EP-B-0 037 612 beschrieben ist. Anschließend wird die Spülflüssigkeit, die im übrigen auch als Prozeßflüssigkeit bezeichnet werden kann, mit Hilfe einer ebenfalls in der Fig. nicht dargestellten Rückleitungseinrichtung der Berieselungseinrichtung 18 wieder zugeführt, so daß diese die Spülflüssigkeit erneut für die Spülung des nachfolgenden organischen Materials abgeben kann.

Mit Hilfe der zuvor beschriebenen Vorrichtung wird demnach das organische Material einer Spülung unterzogen, wodurch aus dem organischen Material lösliche organische Substanzen herausgelöst werden und feste organische Rückstände übrigbleiben, mithin also die löslichen organischen Substanzen von den übrigen festen organischen Substanzen getrennt werden, wobei dieser Verfahrensschritt während des Transportes des organischen Materials in der Transporteinrichtung 10 stattfindet. Dabei sind die Abmessungen, insbesondere zwischen der Eintrittsstelle der Spülflüssigkeit in den Kanal 12 und dessen Auslaßöffnung 20, sowie die Neigung des Kanals 12 derart bemessen, daß die Verweilzeit der organischen Feststoffe im Kanal 12 und die Dauer der Spülung etwa in der Größenordnung von zwei bis acht Stunden liegt. Anschließend werden dann die so voneinander getrennten organischen Rückstände 26 und die in der Spülflüssigkeit löslichen bzw. gelösten Substanzen 22 mit Hilfe von aeroben und anaeroben Gärungsverfahren weiter zersetzt.

## Patentansprüche

1. Verfahren zum Abbau von organischem Material, mit einem ersten Verfahrensschritt, das organische Material mit einer Spülflüssigkeit zu spülen, und mindestens einem zweiten Verfahrensschritt, zumindest einen Teil der im organischen Material enthaltenen organischen Substanzen unter aeroben und/oder anaeroben Bedingungen zu zersetzen,
dadurch gekennzeichnet, daß das organische Material während des Transportes zu dem Ort, an dem der zweite Verfahrensschritt durchgeführt wird, dem ersten Verfahrensschritt unterworfen und dabei die Spülflüssigkeit entgegen der Bewegungsrichtung (A) des organischen Materials geleitet wird.

2. Verfahren nach Anspruch 1,
dadurch gekennzeichnet, daß die Spülflüssigkeit im wesentlichen Wasser ist.

3. Verfahen nach Anspruch 1 oder 2,
dadurch gekennzeichnet, daß die im ersten Verfahrensschritt zurückbleibenden nichtgelösten organischen Rückstände (26) im zweiten Verfahrensschritt unter aeroben Bedingungen zersetzt werden.

4. Verfahren nach mindestens einem der Ansprüche 1 bis 3,
dadurch gekennzeichnet, daß die im ersten Verfahrensschritt gewonnenen und in der Spülflüssigkeit gelösten organischen Substanzen (22) im zweiten Verfahrensschritt unter anaeroben Bedingungen zersetzt werden.

5. Verfahren nach Anspruch 4,
dadurch gekennzeichnet, daß die Spülflüssigkeit die darin gelösten organischen Substanzen (22) dem Reaktionsraum zuführt, in dem während des zweiten Verfahrensschrittes die Zersetzung dieser organischen Substanzen unter anaeroben Bedingungen stattfindet.

6. Verfahren nach mindestens einem der Ansprüche 1 bis 5,
dadurch gekennzeichnet, daß die Spülflüssigkeit nach Trennung von den nichtgelösten Rückständen (26) für die Spülung des nachfolgenden organischen Materials wiederverwendet wird.

7. Verfahren nach den Ansprüchen 4 und 6,
dadurch gekennzeichnet, daß die Spülflüssigkeit nach Durchlaufen des Reaktionsraumes für die Spülung wiederverwendet wird.

8. Verfahren nach mindestens einem der Ansprüche 1 bis 7,
dadurch gekennzeichnet, daß die Spülflüssigkeit unter gegenüber Raumtemperatur erhöhter Temperatur durchgeführt wird.

9. Verfahren nach Anspruch 8,
dadurch gekennzeichnet, daß die Spülflüssigkeit auf mindestens etwa 30°C, vorzugsweise auf mindestens etwa 60°C, erwärmt ist.

10. Verfahren nach Anspruch 8 oder 9,
dadurch gekennzeichnet, daß die Spülflüssigkeit auf weniger als 100°C erwärmt ist.

11. Verfahren nach mindestens einem der Ansprüche 1 bis 10,
dadurch gekennzeichnet, daß die Dauer des ersten Verfahrensschrittes mindestens etwa zwei Stunden beträgt.

12. Verfahren nach mindestens einem der Ansprüche 1 bis 11,
dadurch gekennzeichnet, daß die Dauer des ersten Verfahrensschrittes maximal etwa acht Stunden beträgt.

13. Vorrichtung zum Abbau von organischem Material, insbesondere zur Durchführung eines Verfahrens nach mindestens einem der Ansprüche 1 bis 12, mit einer Eingabeeinrichtung (8) zur Aufnahme von organischem Material und mindestens einer Behandlungseinrichtung, in der zumindest ein Teil der im organischen Material enthaltenen Substanzen unter aeroben und/oder anaeroben Bedingungen zersetzt wird, wobei die Behandlungseinrichtung mit der Eingabeeinrichtung (8) über eine Verbindungseinrichtung (10) verbunden ist, durch die das über die Eingabeinrichtung (8) eingegebene organische Material zur Behandlungseinrichtung geleitet wird, und mit Mitteln (18) zur Abgabe von Spülflüssigkeit zur Spülung des organischen Materials in der Verbindungseinrichtung (10),
dadurch gekennzeichnet, daß die Verbindungseinrichtung (10) Transportmittel (14) zur Beförderung des organischen Materials von der Eingabeeinrichtung (8) zur Behandlungseinrichtung und Mittel (12) zum Ableiten der Spülflüssigkeit aufweist, welche die Spülflüssigkeit entgegen der Transportrichtung (A) der Transportmittel (14) ableiten.

14. Vorrichtung nach Anspruch 13,
dadurch gekennzeichnet, daß die Spülflüssigkeitsabgabemittel (18) stationär angeordnet sind.

15. Vorrichtung nach Anspruch 13 oder 14,
dadurch gekennzeichnet, daß die Spülflüssigkeitsabgabemittel (18) oberhalb der Transportmittel (14) angeordnet sind.

16. Vorrichtung nach Anspruch 15,
dadurch gekennzeichnet, daß die Spülflüssigkeitsabgabemittel (18) als Berieselungsmittel ausgebildet sind.

17. Vorrichtung nach Anspruch 15 oder 16,
dadurch gekennzeichnet, daß die Transportmittel eine Förderspirale (14) aufweisen.

18. Vorrichtung nach mindestens einem der Ansprüche 13 bis 17,
dadurch gekennzeichnet, daß die Transportmittel (14) in einem Kanal (12) angeordnet sind, welcher die Spülflüssigkeitsableitungsmittel bildet und in Transportrichtung (A) der Transportmittel (14) ansteigt.

19. Vorrichtung nach mindestens einem der Ansprüche 13 bis 18,
dadurch gekennzeichnet, daß die Spülflüssigkeitsableitungsmittel (12) die Spülflüssigkeit zu einer Behandlungseinrichtung leiten, in der eine anaerobe Zersetzung der in der Spülflüssigkeit gelösten organischen Substanzen stattfindet, und Spülflüssigkeitsrückleitungsmittel vorgesehen sind, die die Spülflüssigkeit von dieser Behandlungseinrichtung den Spülflüssigkeitsabgabemitteln wieder zuführen.

20. Vorrichtung nach mindestens einem der Ansprüche 13 bis 19,
dadurch gekennzeichnet, daß die Verbindungseinrichtung (10) von einem vorzugsweise wärmegedämmten Gehäuse (3, 4, 6) im wesentlichen umgeben ist.

## Claims

1. A process for the degradation of organic material, having a first process step of rinsing the organic material with a rinsing liquid, and at least one second process step of decomposing at least some of the organic substances present in the organic material under aerobic and/or anaerobic conditions, characterized in that, during transportation to the point where the second process step is carried out, the organic material is subjected to the first process step and during this the rinsing liquid is fed in opposition to the direction of movement (A) of the organic material.

2. A process according to Claim 1, characterized in that the rinsing liquid is substantially water.

3. A process according to Claim 1 or 2, characterized in that the undissolved organic residues (26) remaining in the first process step are decomposed under aerobic conditions in the second process step.

4. A process according to at least one of Claims 1 to 3, characterized in that the organic substances (22) obtained in the first process step and dissolved in the rinsing liquid are decomposed under anaerobic conditions in the second process step.

5. A process according to Claim 4, characterized in that the rinsing liquid supplies the organic substances (22) dissolved therein to the reaction chamber in which these organic substances are decomposed under anaerobic conditions during the second process step.

6. A process according to at least one of Claims 1 to 5, characterized in that, after it has been separated from the undissolved residues (26), the rinsing liquid is used again for rinsing the subsequent organic material.

7. A process according to Claims 4 and 6, characterized in that, after it has passed through the reaction chamber, the rinsing liquid is used again for rinsing.

8. A process according to at least one of Claims 1 to 7, characterized in that the rinsing liquid¹ is carried out at a temperature higher than room temperature.

9. A process according to Claim 8, characterized in that the rinsing liquid is heated to at least approximately 30° C, preferably to at least approximately 60° C.

10. A process according to Claim 8 or 9, characterized in that the rinsing liquid is heated to less than 100° C.

11. A process according to at least one of Claims 1 to 10, characterized in that the duration of the first process step is at least approximately two hours.

12. A process according to at least one of Claims 1 to 11, characterized in that the duration of the first process step is at most approximately 8 hours.

13. A device for the degradation of organic material, in particular for carrying out a process according to at least one of Claims 1 to 12, having an inlet element (8) for receiving organic material and at least one treatment element in which at least some of the substances present in the organic material are decomposed under aerobic and/or anaerobic conditions, the treatment element being connected to the inlet element (8) by way of a connecting element (10) through which the organic material which is introduced by way of the inlet element (8) is fed to the treatment element, and having means (18) or discharging rinsing liquid for rinsing the organic material in the connecting element (10), characterized in that the connecting element (10) has transport means (14) for delivering the organic material from the inlet element (8) to the treatment element, and means (12) for draining the rinsing liquid away, said means draining the rinsing liquid away in opposition to the transport direction (A) of the transport means (14).

14. A device according to Claim 13, characterized in that the rinsing-liquid discharge means (18) are arranged to be stationary.

15. A device according to Claim 13 or 14, characterized in that the rinsing-liquid discharge means (18) are arranged above the transport means (14).

16. A device according to Claim 15, characterized in that the rinsing-liquid discharge means (18) are constructed as trickling means.

17. A device according to Claim 15 or 16, characterized in that the transport means have a helical delivery means (14).

18. A device according to at least one of Claims 13 to 17, characterized in that the transport means (14) are arranged in a channel (12) which forms the means for draining the rinsing liquid away and rises in the transport direction (A) of the transport means (14).

19. A device according to at least one of Claims 13 to 18, characterized in that the means (12) for draining the rinsing liquid away feed the rinsing liquid to a treatment element in which the organic substances dissolved in the rinsing liquid undergo anaerobic decomposition, and there are provided means for feeding the rinsing liquid back which supply the rinsing liquid from this treatment element back to the rinsing-liquid discharge means.

20. A device according to at least one of Claims 13 to 19, characterized in that the connecting element (10) is substantially surrounded by a preferably heat-insulated housing (3, 4, 6).

## Revendications

1. Procédé pour la décomposition de matière organique, une première étape du procédé consistant à laver la matière organique avec un liquide de lavage et à décomposer au moins lors d'une seconde étape du procédé, au moins une partie des substances organiques contenues dans la matière organique dans des conditions aérobie et/ou anaérobie, caractérisé en ce que la matière organique est soumise à la première étape du procédé lors de l'acheminement jusqu'au lieu où est réalisée la seconde étape du procédé le liquide de lavage étant amené, à cette occasion, dans le sens contraire à celui du déplacement de la matière organique.

2. Procédé selon la revendication 1, caractérisé en ce que le liquide de lavage est essentiellement de l'eau.

3. Procédé selon la revendication 1 ou 2, caractérisé en ce que les résidus organiques (26) restants qui n'ont pas été dissous à la première étape du procédé sont décomposés à la seconde étape du procédé dans des conditions aérobies.

4. Procédé selon au moins l'une des revendications 1 à 3, caractérisé en ce que les substances organiques (22) obtenues à la première étape du procédé et qui ont été dissoutes dans le liquide de lavage, sont décomposées à la seconde étape du procédé dans des conditions anaérobies.

5. Procédé selon la revendication 4, caractérisé en ce que le liquide de lavage amène les substances organiques (22) dissoutes dans celui-ci jusqu'à la chambre de réaction, dans laquelle se produit, à la seconde étape, la décomposition de ces substances organiques dans des conditions anaérobies.

6. Procédé selon au moins l'une des revendications 1 à 5, caractérisé en ce que le liquide de lavage est de nouveau utilisé après séparation des résidus non dissous (26) pour le lavage de la matière organique suivante.

7. Procédé selon l'une des revendications 4 à 6, caractérisé en ce que le liquide de lavage est de nouveau utilisé pour le lavage après passage dans la chambre de réaction.

8. Procédé selon au moins l'une de revendications 1 à 7, caractérisé en ce que le liquide de lavage est amené à une température plus élevée que température ambiante.

9. Procédé selon la revendication 8, caractérisé en ce que le liquide de lavage est chauffé au moins à 30°C environ, de préférence au moins à 60°C environ.

10. Procédé selon la revendication 8 ou 9, caractérisé en ce que le liquide de lavage est chauffé à moins de 100°C.

11. Procédé selon au moins l'une des revendications 1 à 10, caractérisé en ce que la durée de la première étape du procédé s'élève au moins à deux heures environ.

12. Procédé selon au moins l'une des revendications 1 à 11, caractérisé en ce que la durée de la première étape du procédé s'élève au maximum à huit heures environ.

13. Appareil pour la décomposition de matière organique, en particulier pour la mise en oeuvre d'un procédé selon au moins l'une des revendications 1 à 12, avec une installation d'admission (8) pour la réception de la matière organique et au moins une installation de traitement, dans laquelle au moins une partie des substances contenues dans la matière organique est décomposée dans des conditions aérobies et/ou anaérobies, moyennant quoi l'installation de traitement communique avec l'installation d'admission (8) par l'intermédiaire d'une installation de communication (10), par l'intermédiaire de laquelle la matière organique entrée par l'installation d'admission (8) est amenée jusqu'à l'installation de traitement, et avec des moyens (18) pour distribuer le liquide de lavage afin de laver la matière organique dans l'installation de communication (10), caractérisé en ce que l'installation de communication (10) présente des moyens de transport (14) pour amener la matière organique de l'installation d'admission (8) jusqu'à l'installation de traitement et des moyens (12) pour évacuer le liquide de lavage, lesquels évacuent le liquide de lavage dans le sens contraire de transport (A) des moyens de transport (14).

14. Appareil selon la revendication 13, caractérisé en ce que les moyens de distribution de liquide de lavage (18) sont agencés de manière fixe.

15. Appareil selon la revendication 13 ou la revendication 14, caractérisé en ce que les moyens de distribution de liquide de lavage (18) sont agencés au-dessus des moyens de transport (14).

16. Appareil selon la revendication 15, caractérisé en ce que les moyens de distribution de liquide de lavage (18) se présentent sous forme de moyens d'irrigation.

17. Appareil selon la revendication 15 ou 16, caractérisé en ce que les moyens de transport présentent une spirale d'avancée (14).

18. Appareil selon au moins l'une des revendications 13 à 17, caractérisé en ce que les moyens de transport (14) sont agencés dans un canal (12), lequel forme les moyens de séparation du liquide de lavage et qui s'agrandit dans le sens de transport (A) des moyens de transport.

19. Appareil selon au moins l'une des revendications 13 à 18, caractérisé en ce que les moyens de séparation du liquide de lavage (12) amènent le liquide de lavage dans une installation de traitement, dans laquelle a lieu une décomposition anaérobie des substances organiques dissoutes dans le liquide de lavage, et sont munis de moyens de retour de liquide de lavage, qui renvoient le liquide de lavage de cette installation de traitement vers les moyens de distribution de liquide de lavage.

20. Appareil selon au moins l'une des revendications 13 à 19, caractérisé en ce que l'installation de communication (10) est essentiellement entourée d'un carter de préférence doté d'une isolation thermique (3, 4, 6).
